# EUROPEAN PATENT SPECIFICATION

(11) **EP 2 818 516 B1**
(45) Date of publication and mention of the grant of the patent: **04.11.2020**
(21) Application number: 13751805.6
(22) Date of filing: 15.02.2013
(51) Int. Cl.: C08L 27/18, C08F 214/26, C08L 101/12, H01B 3/44, H01B 7/02, C08G 73/10, C08G 73/14, C08L 79/08, H01B 3/30, H01B 3/42

(54) **FLUORINE-CONTAINING COPOLYMER COMPOSITION, MOLDED ARTICLE, AND ELECTRIC WIRE**
FLUORHALTIGE COPOLYMERZUSAMMENSETZUNG, FORMKÖRPER UND ELEKTRISCHER DRAHT
COMPOSITION DE COPOLYMÈRE CONTENANT DU FLUOR, ARTICLE MOULÉ ET FIL ÉLECTRIQUE

(30) Priority: 22.02.2012 JP 2012036689
(43) Date of publication of application: 31.12.2014
(73) Proprietor: AGC Inc., Tokyo 100-8405 (JP)
(72) Inventor: ABE, Masatoshi, Tokyo 100-8405 (JP); YANAGAWA, Ryuta, Tokyo 100-8405 (JP); UMINO, Masao, Tokyo 100-8405 (JP)
(74) Representative: Müller-Boré & Partner Patentanwälte PartG mbB
(86) International application number: PCT/JP2013/053751
(87) International publication number: WO 2013/125468

(56) References cited:
- JP-A- H0 711 028
- JP-A- H09 118 802
- JP-A- H09 118 802
- JP-A- H11 209 548
- JP-A- 2005 200 542
- JP-A- 2006 169 399
- US-A1- 2008 107 866
- US-B1- 6 476 125
- "Mechanical Properties of Plastic Materials", , 17 March 2009 (2009-03-17), pages 1-4, XP055210673, Retrieved from the Internet: URL:http://www.professionalplastics.com/pr ofessionalplastics/MechanicalPropertiesofP lastics.pdf [retrieved on 2015-09-01]
- "Tests for thermoplastic materials used in the electrical and electronic industries", , 17 September 2003 (2003-09-17), pages 1-65, XP055210676, Retrieved from the Internet: URL:http://plastics.dupont.com/plastics/pd flit/europe/markets/TestTM_e.pdf [retrieved on 2015-09-01]

## Description

### TECHNICAL FIELD

The present invention relates to a fluorinated copolymer composition, a molded product and an electric wire.

### BACKGROUND ART

As represented by a tetrafluoroethylene polymer, a fluorinated resin is excellent in heat resistance, flame retardance, chemical resistance, weather resistance, non-tackiness, low friction property and low dielectric property. It is, therefore, used in a wide range of fields including e.g. a coating material for heat-resistant non-flammable electric wires, a corrosion-resistant piping material for chemical plants, an agricultural plastic greenhouse material, a release coating material for kitchen utensil, etc.

Particularly, a tetrafluoroethylene/perfluoro(alkyl vinyl ether) copolymer (hereinafter referred to as "PFA") and an ethylene/tetrafluoroethylene copolymer (hereinafter referred to as "ETFE") have the above-mentioned characteristics specific to fluorinated resins and are melt-moldable, and their applications and molding methods are many. Among them, PFA is a perfluoro copolymer and has excellent physical properties such as heat resistance, electric properties, etc. comparable to polytetrafluoroethylene (PTFE). However, PFA is inferior to ETFE in abrasion resistance and thus is not so often used for an electric wire-coating material, etc.

On the other hand, for the purpose of improving the physical properties of PFA, a fluorinated copolymer composition having PFA and a polyamide melt-kneaded, is known (e.g. Patent Document 1). However, such a fluorinated copolymer composition is required to have glass fibers incorporated in order to obtain sufficient abrasion resistance. If glass fibers are incorporated, the electrical insulation properties tend to be impaired, and therefore, such a composition will not be suitable for an application as an electric wire-coating material, etc.

### PRIOR ART DOCUMENT

### PATENT DOCUMENT

Patent Document: Japanese Patent No. 4,661,205
Document 2: JP H09 118802
Document 3: US 6 476 125
Document 4: US 2008 10 7866
Document 5: JP 2006 16 9399

### DISCLOSURE OF INVENTION

### TECHNICAL PROBLEM

It is an object of the present invention to provide a fluorinated copolymer composition which has electrical insulating properties and strength required for e.g. an electric wire-coating material and which is excellent in abrasion resistance, as well as a molded product and an electric wire, using such a fluorinated copolymer composition.

### SOLUTION TO PROBLEM

In order to solve the above problem, the present invention has adopted the following constructions.
[1] A fluorinated copolymer composition comprising the following fluorinated copolymer (A) and the following thermoplastic resin (B) in a volume ratio of (A)/(B) = from 99/10 to 70/30,
   Fluorinated copolymer (A): a fluorinated copolymer comprising constituent units (a) derived from tetrafluoroethylene, constituent units (b) derived from a fluorinated monomer (provided that tetrafluoroethylene is excluded), and constituent units (c) derived from a monomer having an acid anhydride residue and no fluorine atom, wherein per 100 mol% in total of the constituent units (a), (b) and (c), the constituent units (a) are from 50 to 99.89 mol%, the constituent units (b) are from 0.1 to 49.99 mol%, and the constituent units (c) are from 0.01 to 5 mol%,
   Thermoplastic resin (B): a thermoplastic resin having a Rockwell hardness of at least M60 and an insulation performance as defined by ASTM D-257 of at least 10 ¹⁵Ω·cm, wherein the constituent units are units derived from a monomer, which are formed by polymerization of the monomer, and wherein the thermoplastic resin (B) is polyetheretherketone.
[3] The fluorinated copolymer composition according to the above [1], wherein the fluorinated monomer is a perfluoromonomer.
[4] The fluorinated copolymer composition according to the above [3], wherein the perfluoromonomer is at least one member selected from the group consisting of a perfluoro(alkyl vinyl ether) and hexafluoropropylene.
[5] The fluorinated copolymer composition according to any one of the above [1] to [4], wherein the average particle size of the thermoplastic resin (B) is at most 4.5 µm.
[6] The fluorinated copolymer composition according to any one of the above [1] to [5], wherein the total content of the fluorinated copolymer (A) and the thermoplastic resin (B) is from 50 to 100 mass% in the fluorinated copolymer composition (100 mass%).
[7] A method for producing the fluorinated copolymer composition as defined in any one of the above [1] to [6], which comprises melt-kneading the fluorinated copolymer (A) and the thermoplastic resin (B).
[8] A molded product formed by molding the fluorinated copolymer composition as defined in any one of the above [1] to [6].
[9] An electric wire having a core wire covered with the fluorinated copolymer composition as defined in any one of the above [1] to [6].

### ADVANTAGEOUS EFFECTS OF INVENTION

The fluorinated copolymer composition of the present invention has electrical insulating properties and strength required for e.g. an electric wire-coating material and is excellent in abrasion resistance.

Further, the molded product of the present invention has electrical insulating properties and strength required for e.g. an electric wire-coating material and is excellent in abrasion resistance.

Further, the electric wire of the present invention has sufficient electrical insulating properties and strength and excellent abrasion resistance.

### BRIEF DESCRIPTION OF DRAWINGS

Fig. 1 is a microscopic photograph (3,000 magnifications) of a cross section of the fluorinated copolymer composition in Ex. 3.
Fig. 2 is a microscopic photograph (3,000 magnifications) of a cross section of the fluorinated copolymer composition in Ex. 13.

### DESCRIPTION OF EMBODIMENTS

The term "constituent units" in this specification means units derived from a monomer, which are formed by polymerization of the monomer. The constituent units may be units formed directly by a polymerization reaction, or may be units having some of such units in a polymer converted to another structure by treating the polymer.

Further, a "monomer" in this specification means a compound having a polymerizable unsaturated bond i.e. a polymerization reactive carbon-carbon double bond. Further, a "fluorinated monomer" means a monomer having fluorine atom(s) in its molecule, and a "non-fluorinated monomer" means a monomer having no fluorine atom in its molecule.

### <Fluorinated copolymer composition>

The fluorinated copolymer composition of the present invention is a composition comprising the following fluorinated copolymer (A) and thermoplastic resin (B) in a specific ratio.

### [Fluorinated copolymer (A)]

Fluorinated copolymer (A) is a fluorinated resin comprising constituent units (a) derived from tetrafluoroethylene (hereinafter referred to as "TFE"), constituent units (b) derived from a fluorinated monomer (provided that tetrafluoroethylene is excluded), and constituent units (c) derived from a monomer (hereinafter referred to as an "AM monomer") having an acid anhydride residue and no fluorine atom.

The fluorinated copolymer (A) is excellent in heat resistance, electrical insulating properties, flame retardance, chemical resistance, weather resistance, etc.

The above fluorinated monomer includes, for example, the following monomers.

A fluoroolefin such as vinyl fluoride, vinylidene fluoride (hereinafter referred to as "VdF"), trifluoroethylene, chlorotrifluoroethylene (hereinafter referred to as "CTFE"), hexafluoropropylene (hereinafter referred to as "HFP") or the like,
CF₂=CFOR¹ (wherein R¹ is a C₁₋₁₀ perfluoroalkyl group which may have an etheric oxygen atom),
CF₂=CFOR²SO₂X¹ (wherein R² is a C₁₋₁₀ perfluoroalkylene group which may have an etheric oxygen atom, and X¹ is a halogen atom or a hydroxy group),
CF₂=CFOR³CO₂X² (wherein R³ is a C₁₋₁₀ perfluoroalkylene group which may have an etheric oxygen atom, and X² is a hydrogen atom or an alkyl group having at most 3 carbon atoms),
CF₂=CF(CF₂)ₚOCF=CF₂ (wherein p is 1 or 2),
CH₂=CX³(CF₂)_{q}X⁴ (wherein X³ is a hydrogen atom or a fluorine atom, q is an integer of from 2 to 10, and X⁴ is a hydrogen atom or a fluorine atom),
perfluoro(2-methylene-4-methyl-1,3-dioxolane), perfluoro(2,2-dimethyl-1,3-dioxole), perfluoro(4-methoxy-1,3-dioxole), etc.

The fluorinated monomer is preferably a perfluoro monomer, more preferably at least one member selected from the group consisting of a perfluoro(alkyl vinyl ether) and HFP.

A fluorinated monomer other than the perfluoro monomer is preferably at least one member selected from the group consisting of VdF, CTFE and CH₂=CX³(CF₂)_{q}X⁴, more preferably CH₂=CX³(CF₂)_{q}X⁴.

Specific examples of the perfluoro(alkyl vinyl ether) include CF₂=CFOCF₃, CF₂=CFO(CF₂)₂F, CF₂=CFO(CF₂)₃F, CF₂=CFO(CF₂)₄F, CF₂=CFO(CF₂)₈F, etc. Among them, CF₂=CFO(CF₂)₃F is preferred.

Specific examples of CH₂=CX³(CF₂)_{q}X⁴ include CH₂=CH(CF₂)₂F, CH₂=CH(CF₂)₃F, CH₂=CH(CF₂)₄F, CH₂=CH(CF₂)₃H, CH₂=CH(CF₂)₄H, etc. Among them, CH₂=CH(CF₂)₄F or CH₂=CH(CF₂)₂F is preferred.

The fluorinated copolymer (A) may have constituent units (b) of one type only or constituent units (b) of two or more types.

The AM monomer is a monomer having an acid anhydride residue and no fluorine atom. It may, for example, be itaconic anhydride (hereinafter referred to as "IAH"), citraconic anhydride (hereinafter referred to as "CAH"), 5-norbornene-2,3-dicarboxylic acid anhydride (hereinafter referred to as "NAH") or maleic anhydride. Among them, at least one member selected from the group consisting of IAH, CAH and NAH is preferred, and IAH or NAH is more preferred.

When at least one member selected from the group consisting of IAH, CAH and NAH is used as the AM monomer, it is possible to easily produce a fluorinated copolymer (A) without employing a special polymerization method (as disclosed in JP-A-11-193312) required e.g. in a case where maleic anhydride is used.

The fluorinated copolymer (A) may have constituent units (c) of one type only or constituent units (c) of two or more types.

It is also preferred that the fluorinated copolymer (A) further contains, in addition to constituent units (a) to (c), constituent units (d) derived from a non-fluorinated monomer (provided that an AM monomer is excluded).

Such a non-fluorinated monomer may, for example, be an olefin having at most 3 carbon atoms, such as ethylene (hereinafter referred to as "E") or propylene (hereinafter referred to as "P"), or a vinyl ester such as vinyl acetate (hereinafter referred to as "VOA"). Among them, E, P or VOA is preferred, and E is more preferred.

The fluorinated copolymer (A) may have constituent units (d) of one type only or constituent units (d) of two or more types.

The ratios of the respective constituent units in the fluorinated copolymer (A) are such that per 100 mol% in total of the constituent units (a) to (c), the constituent units (a) are from 50 to 99.89 mol%, the constituent units (b) are from 0.1 to 49.99 mol%, and the constituent units (c) are from 0.01 to 5 mol%. The ratios of the respective units are preferably such that the constituent units (a) are from 50 to 99.4 mol%, the constituent units (b) are from 0.5 to 49.9 mol%, and the constituent units (c) are from 0.1 to 3 mol%, more preferably such that the constituent units (a) are from 50 to 98.9 mol%, the constituent units (b) are from 1 to 49.9 mol%, and the constituent units (c) are from 0.1 to 2 mol%.

When the ratios of constituent units (a) to (c) are within the above ranges, the fluorinated copolymer (A) will be excellent in heat resistance and chemical resistance, and the fluorinated copolymer composition will be further excellent in abrasion resistance.

When the ratio of constituent units (b) is within the above range, the fluorinated copolymer (A) will be excellent in moldability, and it becomes possible to produce a molded product excellent in mechanical properties such as stress crack resistance, etc. by the fluorinated copolymer composition of the present invention.

When the ratio of constituent units (c) is within the above range, the fluorinated copolymer (A) will be excellent in kneading properties with the thermoplastic resin (B), and it will be possible to obtain a fluorinated copolymer composition excellent in such properties as electrical insulating properties, strength, abrasion resistance, etc.

The ratio of the total amount of constituent units (a) to (c) to all constituent units in the fluorinated copolymer (A) is preferably at least 60 mol%, more preferably at least 65 mol%, further preferably at least 68 mol%.

In a case where the fluorinated copolymer (A) has constituent units (d), the molar ratio ((a)+(b)+(c))/(d) of the total amount of constituent units (a) to (c) to constituent units (d) is preferably from 100/5 to 100/90, more preferably from 100/5 to 100/80, further preferably from 100/10 to 100/65.

Further, the fluorinated copolymer (A) may have constituent units derived from an unsaturated dicarboxylic acid such as itaconic acid, citraconic acid, 5-norbornene-2,3-dicarboxylic acid or maleic acid formed by hydrolysis of an AM monomer. In a case where the fluorinated copolymer (A) has constituent units derived from such an unsaturated dicarboxylic acid, the ratio of the constituent units (c) shall represent the total ratio of constituent units derived from the AM monomer and constituent units derived from the unsaturated dicarboxylic acid.

The fluorinated copolymer (A) is preferably a TFE/CF₂=CFO(CF₂)₃F/IAH copolymer, a TFE/CF₂=CFO(CF₂)₃F/CAH copolymer, a TFE/CF₂=CFO(CF₂)₃F/NAH copolymer, a TFE/HFP/IAH copolymer, a TFE/HFP/CAH copolymer, a TFE/VdF/IAH copolymer, a TFE/VdF/CAH copolymer, a TFE/ CH₂=CH(CF₂)₄F /IAH/E copolymer, a TFE/ CH₂=CH(CF₂)₄F /CAH/E copolymer, a TFE/ CH₂=CH(CF₂)₂F /IAH/E copolymer or a TFE/ CH₂=CH(CF₂)₂F /CAH/E copolymer, more preferably a TFE/CF₂=CFO(CF₂)₃F/IAH copolymer, a TFE/CF₂=CFO(CF₂)₃F/CAH copolymer, a TFE/CF₂=CFO(CF₂)₃F/NAH copolymer, a TFE/HFP/IAH copolymer or a TFE/HFP/CAH copolymer.

The fluorinated copolymer (A) contained in the fluorinated copolymer composition of the present invention may be of one type, or two or more types.

The fluorinated copolymer (A) preferably has, as a polymer terminal group, a functional group such as an ester group, a carbonate group, a hydroxy group, a carboxy group, a carbonyl fluoride group or an acid anhydride residue, whereby the fluorinated copolymer (A) and the thermoplastic resin (B) will be better mixed. Such a functional group is preferably introduced by using e.g. a radical polymerization initiator or chain transfer agent capable of introducing the functional group, at the time of production of the fluorinated copolymer (A).

The melt flow rate (hereinafter referred to as "MFR") of the fluorinated copolymer (A) is preferably from 0.5 to 100 g/10 min., more preferably from 1 to 30 g/10 min., further preferably from 5 to 20 g/10 min.

When the MFR is at least the above lower limit value, the fluorinated copolymer composition will be excellent in moldability, and it will be possible to produce a molded product having an excellent appearance. When the MFR is at most the above upper limit value, it will be possible to produce a molded product excellent in mechanical properties.

Here, MFR in the present invention is a value to be measured under the measuring conditions as described in Examples given hereinafter. MFR is an index for the molecular weight, i.e. the larger the MFR, the lower the molecular weight, and the smaller the MFR, the higher the molecular weight.

The melting point (Tm) of the fluorinated copolymer (A) is preferably from 150 to 320°C, more preferably from 200 to 310°C, further preferably from 260 to 310°C

When the melting point of the fluorinated copolymer (A) is within such a range, the co-melt extrusion moldability with the thermoplastic resin (B) will be excellent. Further, the fluorinated copolymer composition will be excellent in heat resistance.

Here, the melting point is a value to be measured under the measuring conditions as disclosed in Examples given hereinafter.

### (Method for producing fluorinated copolymer (A))

The method for producing the fluorinated copolymer (A) is not particularly limited, and, for example, a polymerization method employing a radical polymerization initiator may be used. Such a polymerization method may, for example, be bulk polymerization; solution polymerization using an organic solvent such as a fluorohydrocarbon, a chlorohydrocarbon, a fluorochlorohydrocarbon, an alcohol or a hydrocarbon; suspension polymerization using an aqueous medium and, as the case requires, an organic solvent; or emulsion polymerization using an aqueous medium and an emulsifier, and solution polymerization is preferred.

The radical initiator is preferably an initiator, of which the temperature at which its half-life is 10 hours, is within a range of from 0°C to 100°C, more preferably an initiator, of which said temperature is within a range of from 20 to 90°C.

Specific examples of the radical polymerization initiator include, for example, an azo compound (such as azobisisobutylonitrile), a non-fluorinated diacyl peroxide (such as isobutylyl peroxide, octanoyl peroxide, benzoyl peroxide or lauroyl peroxide), a peroxy dicarbonate (such as diisopropyl peroxycarbonate), a peroxy ester (such as tert-butyl peroxypivalate, tert-butyl peroxyisobutylate or tert-butyl peroxyacetate), a fluorinated diacyl peroxide (such as a compound represented by (Z(CF₂)ᵣCOO)₂ (wherein Z is a hydrogen atom, a fluorine atom or a chlorine atom, and r is an integer of from 1 to 10), an inorganic peroxide (such as potassium peroxide, sodium peroxide or ammonium peroxide), etc.

In the production of the fluorinated copolymer (A), it is preferred to use a chain transfer agent to control MFR of the fluorinated copolymer (A).

The chain transfer agent may, for example, be an alcohol (such as methanol or ethanol), a chlorofluorohydrocarbon (such as 1,3-dichloro-1,1,2,2,3-pentafluoropropane or 1,1-dichloro-1-fluoroethane), or a hydrocarbon (such as pentane, hexane or cyclohexane). Further, in a case where the above functional group is to be introduced as a polymer terminal group, acetic acid, acetic anhydride, methyl acetate, ethylene glycol or propylene glycol may, for example, be mentioned.

The polymerization conditions are not particularly limited. The polymerization temperature is preferably from 0 to 100°C, more preferably from 20 to 90°C. The polymerization pressure is preferably from 0.1 to 10 MPa(G), more preferably from 0.5 to 3 MPa(G). The polymerization time is preferably from 1 to 30 hours.

The amounts of the respective monomers to be used for the polymerization may suitably be adjusted depending upon the ratios of the respective constituent units in the desired fluorinated copolymer (A).

The concentration of the AM monomer during the polymerization is preferably from 0.01 to 5 mol%, more preferably from 0.1 to 3 mol%, further preferably from 0.1 to 1 mol%, per 100 mol% of all monomers during the polymerization. Specifically, during the polymerization, it is preferred that as the AM monomer is consumed by polymerization, the consumed amount is continuously or intermittently supplied into the polymerization vessel to maintain the concentration of the AM monomer within the above range.

When the concentration of the AM monomer during the polymerization is at most the above upper limit value, a sufficient polymerization rate is readily obtainable. Further, when the concentration of the AM monomer during the polymerization is at least the above lower limit value, a fluorinated copolymer (A) excellent in adhesion to the thermoplastic resin (B) is obtainable.

### [Thermoplastic resin (B)]

The thermoplastic resin (B) is a thermoplastic resin having a Rockwell hardness of at least M60 and an insulation performance as defined by ASTM D-257 of at least 10¹⁵Ω·cm. When the Rockwell hardness of the thermoplastic resin (B) is at least M60, the fluorinated copolymer composition will be excellent in abrasion resistance. Further, when the above insulation performance of the thermoplastic resin (B) is at least 10¹⁵Ω·cm, the fluorinated copolymer composition will be excellent in electrical insulating properties.

The Rockwell hardness of the thermoplastic resin (B) is preferably at least M80, more preferably at least M90. Further, the Rockwell hardness of the thermoplastic resin (B) is preferably at most M130, more preferably at most M125, most preferably at most M120.

When the Rockwell hardness of the thermoplastic resin (B) is at least the above lower limit value, the fluorinated copolymer composition will be further excellent in abrasion resistance. When the Rockwell hardness of the thermoplastic resin (B) is at most the above upper limit value, the fluorinated copolymer composition will be excellent in abrasion resistance. Further, it will be excellent in toughness.

The above insulation performance of the thermoplastic resin (B) is preferably at least 10¹⁶Ω·cm. When the above insulation performance of the thermoplastic resin (B) is at least the above lower limit value, the fluorinated copolymer composition will be further excellent in electrical insulating properties.

The thermoplastic resin (B) is preferably at least one member selected from the group consisting of a polyamideimide (hereinafter referred to as "PAI"), a polyetherimide (hereinafter referred to as "PEI") and a polyetheretherketone (hereinafter referred to as "PEEK").

PAI, PEI and PEEK have the above insulation performance of at least 10¹⁶Ω·cm. Ones having the above Rockwell hardness of at least M90 will be readily obtainable. The above Rockwell hardness may be increased by increasing the polymerization degree.

PAI satisfying the above conditions for insulation performance and hardness may, for example, be TORLON 400TF manufactured by Solvay Advanced Polymers.

PEI satisfying the above conditions for insulation performance and hardness may, for example, be Ultem 1000, 1040, XH6050, STM1700, etc. manufactured by SABIC.

PEEK satisfying the above conditions for insulation performance and hardness may, for example, be KetaSpire KT-820, etc. manufactured by Solvay Advanced Polymers.

The thermoplastic resin (B) contained in the fluorinated copolymer composition of the present invention may be of one type, or two or more types.

MFR of the thermoplastic resin (B) is preferably from 0.5 to 200 g/10 min., more preferably from 1 to 100 g/10 min., further preferably from 3 to 50 g/10 min. When MFR of the thermoplastic resin (B) is at least the above lower limit value, the kneading property with the fluorinated copolymer (A) will be excellent, and it will be possible to form a molded product excellent in surface smoothness by the fluorinated copolymer composition of the present invention. When MFR of the thermoplastic resin (B) is at most the above upper limit value, the mechanical properties will be excellent.

### [Other components]

The fluorinated copolymer composition of the present invention may contain other components other than the fluorinated copolymer (A) and the thermoplastic resin (B), within a range not to substantially impair the characteristics. Such other components may, for example, be other polymers other than the fluorinated copolymer (A) and the thermoplastic resin (B), a filler, a pigment, etc.

Such other polymers include, for example, polycarbonate, polyethylene terephthalate, polybutylene terephthalate, polyarylate, polycaprolactone, a phenoxy resin, polysulfone, polyether sulfone, polyetherketone, polyamide 6, polyamide 66, polyamide 11, polyamide 12, polyamide 160, polyphenylene oxide, polyphenylene sulfide, polytetrafluoroethylene, an acrylonitrile/butadiene/styrene copolymer (ABS), polymethyl methacrylate (PMMA), polypropylene, polyethylene, polybutadiene, a butadiene/styrene copolymer, an ethylene/propylene copolymer, an ethylenepropylenediene rubber (EPDM), a styrene/butadiene block copolymer, a butadiene/acrylonitrile copolymer, acryl rubber, a styrene/maleic anhydride copolymer, a styrene/phenyl maleimide copolymer, etc.

The filler is preferably an inorganic filler. The inorganic filler includes, for example, fibrous fillers (such as glass fibers, carbon fibers, boron fibers, aramide fibers, liquid polyester fibers, stainless steel microfibers, etc.), powdery fillers (such as talc, mica, graphite, molybdenum disulfide, polytetrafluoroethylene, calcium carbonate, silica, silica alumina, alumina, titanium dioxide, etc.), etc. One of these inorganic fillers may be used alone, or two or more of them may be used in combination.

The filler may, for example, be a coloring pigment such as an organic pigment or an inorganic pigment. Specific examples of the coloring pigment include, for example, carbon black (black pigment), iron oxide (red pigment), aluminum-cobalt oxide (blue pigment), copper phthalocyanine (blue pigment, green pigment), perylene (red pigment), bismuth vanadate (yellow pigment), etc.

In the fluorinated copolymer composition of the present invention, the volume ratio ((A)/(B)) of the fluorinated copolymer (A) to the thermoplastic resin (B) is from 99/1 to 55/45. As the fluorinated copolymer (A) and the thermoplastic resin (B) are contained in the above volume ratio, excellent abrasion resistance is obtainable.

The above volume ratio ((A)/(B)) is preferably from 95/5 to 55/45, more preferably from 95/5 to 60/40, further preferably from 90/10 to 70/30. The higher the ratio of the thermoplastic resin (B), the better the abrasion resistance of the fluorinated copolymer composition. Further, the higher the ratio of the fluorinated copolymer (A), the better the heat resistance, flame retardance, chemical resistance, weather resistance, etc. of the fluorinated copolymer composition.

In the fluorinated copolymer composition (100 mass%) of the present invention, the content of the fluorinated copolymer (A) is preferably from 99.0 to 60.0 mass%, more preferably from 95.0 to 70.0 mass%, further preferably from 95.0 to 80.0 mass%.

In the fluorinated copolymer composition (100 mass%) of the present invention, the content of the thermoplastic resin (B) is preferably from 40.0 to 1.0 mass%, more preferably from 30.0 to 5.0 mass%, further preferably from 20.0 to 5.0 mass%.

In the fluorinated copolymer composition (100 mass%) of the present invention, the total content of the fluorinated copolymer (A) and the thermoplastic resin (B) is preferably from 20 to 100 mass%, more preferably from 50 to 100 mass%, further preferably from 80 to 100 mass%.

In the fluorinated copolymer composition (100 mass%) of the present invention, the content of other polymers is preferably at most 80 mass%, more preferably at most 50 mass%, further preferably at most 20 mass%.

In a case where the fluorinated copolymer composition of the present invention contains an inorganic filler, the ratio (W₁/W₂) of the total mass W₁ of the fluorinated copolymer (A) and the thermoplastic resin (B) to the mass W₂ of the inorganic filler, is preferably from 95/5 to 50/50, more preferably from 95/5 to 60/40, further preferably from 90/10 to 70/30. When the ratio (W₁/W₂) is within the above range, the fluorinated copolymer composition will be excellent in mechanical properties and electrical properties.

The fluorinated copolymer composition of the present invention preferably contains no inorganic filler.

The content of the coloring pigment in the fluorinated copolymer composition of the present invention is preferably at most 20 parts by mass, more preferably at most 10 parts by mass, further preferably at most 5 parts by mass, per 100 parts by mass in total of the fluorinated copolymer (A) and the thermoplastic resin (B). When the content of the coloring pigment is at most the above upper limit, the non-tackiness and abrasion resistance by the fluorinated copolymer (A) are sufficiently obtainable.

The fluorinated copolymer composition of the present invention would have a sea-island structure such that the fluorinated copolymer (A) be the sea and the thermoplastic resin (B) be the islands.

The average particle size of the thermoplastic resin (B) in the fluorinated copolymer composition of the present invention is preferably at most 4.5 µm, more preferably at most 4.0 µm. When the average particle size of the thermoplastic resin (B) is at most the upper limit value, the fluorinated copolymer composition will be excellent in abrasion resistance.

The average particle size is a value to be measured by the method described in Examples given hereinafter.

### [Method for producing fluorinated copolymer composition]

The method for producing the fluorinated copolymer composition of the present invention may, for example, be a method of dry blending the fluorinated copolymer (A), the thermoplastic resin (B) and, as the case requires, other components, or a method of melt-kneading them by means of an extruder. From the viewpoint of the operation efficiency, the method of melt-kneading them by means of an extruder is particularly preferred.

The extruder to be used for the melt-kneading is preferably a twin screw extruder. The melt-kneading temperature is preferably from 280 to 380°C. The retention time in the extruder is preferably from 10 seconds to 10 minutes. The screw rotational speed is preferably from 50 rpm to 1,500 rpm.

Applications of the fluorinated copolymer composition of the present invention include, for example, electric wire coating materials, slide members such as bearings, gear wheels, bushes, spacers, rollers, cams, etc. The fluorinated copolymer composition of the present invention is useful particularly as an electric wire coating material, since it has excellent abrasion resistance and is further excellent in heat resistance, electrical insulating properties, chemical resistance, mechanical strength, moldability, etc.

The fluorinated copolymer composition of the present invention as described in the foregoing comprises the fluorinated copolymer (A) and the thermoplastic resin (B), whereby it is excellent in various properties including heat resistance, electrical insulating properties, etc. as well as abrasion resistance.

### <Molded product>

The molded product of the present invention is a molded product formed by molding the fluorinated copolymer composition of the present invention. The molded product may, for example, be those mentioned above as applications of the fluorinated polymer composition of the present invention.

The molding method may suitably be selected for use depending upon the type, application, shape, etc. of the desired molded product, and two or more molding methods may be used in combination. Specific examples of the molding method include, for example, injection molding, extrusion molding, electric wire molding, press molding, blow molding, calendar molding, etc. The electric wire molding is a molding method wherein by means of an extruder, a molten resin is extruded on a core wire (conductor) of the electric wire to cover the core wire.

### <Electric wire>

The electric wire of the present invention is an electric wire having a core wire covered with the fluorinated copolymer composition of the present invention. That is, it is an electric wire having an electric wire coating material made of the fluorinated copolymer composition of the present invention molded on a core wire.

The material for the core wire is preferably copper. Further, to the copper core wire, plating of tin, silver or the like may be applied. The diameter of the core wire is preferably from 10 µm to 3 mm. The diameter of the electric wire is preferably from 20 µm to 5 mm. The thickness of the electric wire coating material is preferably from 5 µm to 2 mm.

### EXAMPLES

Now, the present invention will be described in detail with reference to Examples, but it should be understood that the present invention is by no means restricted by the following description. Ex. 1 is a Preparation Example, Ex. 9-10 are Examples of the present invention, and Ex. 2-8 and 11-23 are Comparative Examples.

### [Copolymerization composition of fluorinated copolymer]

The copolymerization composition of a fluorinated copolymer was calculated from the results of the melt NMR analysis, fluorine-content analysis and infrared absorption spectrum analysis.

### [Melting point (°C)]

By means of DSC apparatus manufactured by Seiko Electronics Industrial Co., Ltd., the melting peak at the time of raising the temperature at a rate of 10°C/min. was recorded, and the temperature (°C) corresponding to the maximum value was taken as the melting point (Tm).

### [MFR (g/10 min.)]

By means of a melt indexer manufactured by Technol Seven Co., Ltd., the mass (g) of a fluorinated copolymer flowing out from a nozzle having a diameter of 2 mm and a length of 8 nm for 10 minutes under a load of 5 kg, was measured. The temperature for the measurement was 372°C.

### [Abrasion resistance]

By means of a rotary frictional abrasion tester, a sliding test for 24 hours was carried out under conditions of a counter metal (SMC45, 2 cm²), a load of 10 kgf and a speed of 0.5 m/sec., and the wear volume after the test was measured.

### [Tensile strength/elongation (strength: MPa, elongation: %)]

The shape of a sample was adjusted to be No. 3 dumbbell (thickness: 1 mm) stipulated in JIS K6301 (enacted on July 25, 1950 and abolished on August 20, 1998), and by means of Strograph manufactured by Toyo Seiki Seisaku-sho, Ltd. in a constant temperature and humidity environment at a temperature of 23±2°C under a humidity of 50%±10%, a tensile strength/elongation test was carried out under conditions of a gauge length of 20 mm and a tensile speed of 200 m/min. The strength at the time when the sample fractured, was taken as the tensile strength, and the ratio of the length of the sample at the time of fracture to the initial length of the sample was taken as the tensile elongation.

### [Average particle size (µm)]

The fluorinated copolymer composition to be measured, was frozen in liquid nitrogen and then cut, whereupon the cross-section of the fluorinated copolymer composition was observed by FE-SEM (scanning electron microscope) manufactured by Hitachi High-Technologies Corporation. With respect to all particles of thermoplastic resin (B) (from 10 to 20 particles) observed in the microscopic photograph of 40 µm x 30 µm with 3,000 magnifications, the respective long diameters were visually measured, and their average value was taken as the average particle size of the thermoplastic resin (B).

### [Raw materials]

PFA: trade name "Fluon (registered trademark) PFA P-63P" manufactured by Asahi Glass Company, Limited.

PAI: trade name "TORLON400TF" manufactured by Solvay Advanced Polymers, Rockwell hardness: M119, insulation performance: 10¹⁷Ω·cm.

PEEK: trade name: "KetaSpire (registered trademark) KT-820" manufactured by Solvay Advanced Polymers, Rockwell hardness: M99, insulation performance: 10¹⁶Ω·cm.

PEI: trade name "Ultem 1000, 1040, XH6050, STM1700" manufactured by SABIC, Rockwell hardness: M109, insulation performance: 10¹⁶Ω·cm.

PA: trade name "STANYL TW441" manufactured by DSM Engineering Plastics, polyamide 4,6, Rockwell hardness: M120, insulation performance: 10¹³Ω·cm.

NAH: 5-norbornene-2,3-dicarboxylic acid anhydride, manufactured by Hitachi Chemical Co., Ltd.

PPVE: CF₂=CFO(CF₂)₃F (perfluoropropyl vinyl ether), manufactured by Asahi Glass Company, Limited.

### [Ex. 1] Production of fluorinated copolymer (A-1)

Inside of a polymerization vessel having an internal volume of 430L and equipped with a stirrer, was evacuated, and then, into the polymerization vessel, 369 kg of 1,3-dichloro-1,1,2,2,3-pentafluoropropane (AK225cb, manufactured by Asahi Glass Company, Limited) and 30 kg of PPVE as a fluorinated monomer, were charged. Then, inside of the polymerization vessel was heated to 50°C, and 50 kg of TFE was further charged, whereupon the pressure in the polymerization vessel was raised to 0.89 MPa(G).

Then, a polymerization initiator solution having 0.36 mass% of (perfluorobutylyl) peroxide dissolved in AK225cb was prepared, and polymerization was carried out while continuously adding 3L of the polymerization initiator solution at a rate of 6.25 mL/min. to the polymerization vessel. During the polymerization, TFE was continuously charged so that the pressure in the polymerization vessel was maintained to be 0.89 MPa (G). Further, a solution having 0.3 mass% of NAH as an AM monomer dissolved in AK225cb, was continuously charged together with TFE charged during the polymerization. The amount of NAH charged during the polymerization was maintained to be 0.1 mol% to the number of moles of TFE charged together during the polymerization.

After 8 hours from the initiation of the polymerization when the amount of TFE continuously charged during the polymerization reached 32 kg, the temperature in the polymerization vessel was lowered to room temperature and at the same time, the pressure was purged to atmospheric pressure. The obtained slurry was separated from AK225cb by solid-liquid separation and then, dried at 150°C for 15 hours to obtain 33 kg of a fluorinated copolymer (A-1). The specific gravity of the obtained fluorinated copolymer (A-1) was 2.15.

From the results of the melt NMR analysis, the fluorine-content analysis and the infrared absorption spectrum analysis, the copolymerization composition of the fluorinated copolymer (A-1) was calculated and found to be constituent units derived from TFE/constituent units derived from NAH/constituent units derived from PPVE = 97.9/0.1/2.0 (mol%). Further, this fluorinated copolymer (A-1) had a melting point of 300 and a MFR of 17.6 g/10 min.

### [Ex. 2 to 11]

Into a Laboplastmill kneader manufactured by Toyo Seiki Kogyo Co., Ltd., the fluorinated copolymer (A-1) and PAI, PEEK or PEI, were introduced in the volume ratios as shown in Table 1, followed by melt kneading under conditions of a screw rotational speed of 30 rpm, a kneading time of 10 minutes and a kneading temperature of 380°C, to obtain fluorinated copolymer compositions 1 to 10.

### [Ex. 12 to 22]

Fluorinated copolymer compositions 11 to 21 were obtained in the same manner as in Ex. 2 to 11 except that the composition of the fluorinated copolymer (A-1) and the thermoplastic resin (B) was changed as shown in Table 2.

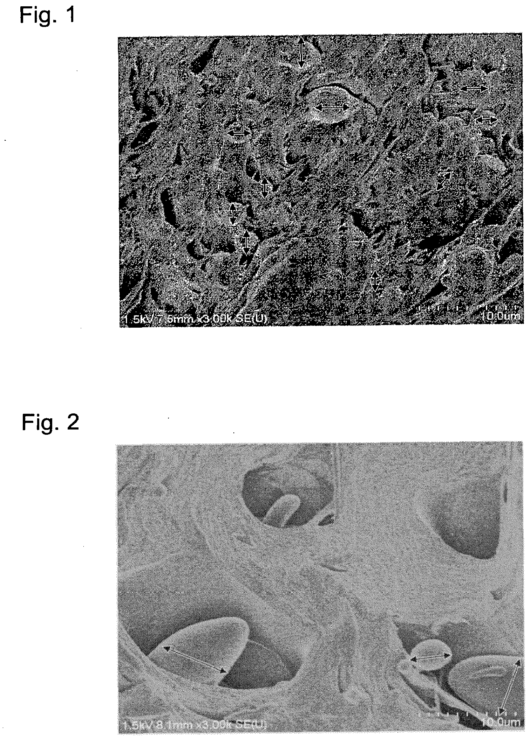

The evaluation results of the fluorinated copolymer compositions 1 to 21 in Ex. 2 to 22 are shown in Tables 1 and 2. Further, microscopic photographs of the cross-sections used for measuring the average particle sizes of the thermoplastic resin (B) in the fluorinated copolymer composition 2 in Ex. 3 and the fluorinated copolymer composition 12 in Ex. 13, are shown in Figs. 1 and 2, respectively. The arrows in Figs. 1 and 2 indicate the portions measured as the particle sizes.

Here, with respect to the average particle size of the thermoplastic resin (B) in the fluorinated copolymer composition 12 in Ex. 13, some of long diameters could not be measured, and therefore, as the particles sizes of this thermoplastic resin (B), the short diameters were measured and used instead of the long diameters. Therefore, the average particle size of the thermoplastic resin (B) in the fluorinated copolymer composition 13 should practically be a value larger than 4.5 µm. Further, the same applies to the average particle sizes in Ex. 14, 15, 17 and 18.

### [Ex. 23]

A fluorinated copolymer composition 22 was obtained in the same manner as in Ex. 2 to 21 except that the kneading temperature was changed to 320°C, the thermoplastic resin (B) was changed to polyamide 4,6, and the composition was changed as shown in Table 2.

The evaluation results of the fluorinated copolymer composition 22 in Ex.23 are shown in Table 2.

**TABLE 1**

| | | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|
| Fluorinated copolymer composition | | 1 | 2 | 3 | 4 | 5 | 6 | 7 | 8 | 9 | 10 |
| Fluorinated copolymer (A-1) [vol%] | | 95 | 90 | 70 | 60 | 90 | 70 | 60 | 90 | 70 | 60 |
| Thermoplastic resin (B) | PAI [vol%] | 5 | 10 | 30 | 40 | - | - | - | - | - | - |
| | PEI [vol%] | - | - | - | - | 10 | 30 | 40 | - | - | - |
| | PEEK [vol%] | - | - | - | - | - | - | - | 10 | 30 | 40 |
| | Average particle size [µm] | 1.1 | 2.8 | 2.8 | 3.0 | 1.0 | 3.7 | 4.1 | 1.9 | 1.8 | 4.1 |
| Wear volume (×10⁻²) [cm³] | | 1.97 | 0.49 | 0.39 | 0.28 | 2.20 | 2.10 | 0.70 | 0.57 | 0.28 | 0.30 |
| Tensile strength [MPa] | | 23.7 | 19.8 | 21.3 | 21.5 | 28.1 | 13.8 | 19.6 | 22.2 | 16.9 | 19.9 |
| Tensile elongation [%] | | 325 | 281 | 141 | 50 | 443 | 302 | 172 | 300 | 6 | 2 |

**TABLE 2**

| | | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|---|---|
| Fluorinated copolymer composition | | 11 | 12 | 13 | 14 | 15 | 16 | 17 | 18 | 19 | 20 | 21 | 22 |
| Fluorinated copolymer (A-1) [vol%] | | - | - | - | - | - | - | - | - | - | - | 100 | 40 |
| Fluorinated copolymer | PFA [vol%] | 95 | 90 | 70 | 60 | 90 | 70 | 60 | 90 | 70 | 60 | - | - |
| Thermoplastic resin (B) | PAI [vol%] | 5 | 10 | 30 | 40 | - | - | - | - | - | - | - | - |
| | PEI [vol%] | - | - | - | - | 10 | 30 | 40 | - | - | - | - | - |
| | PEEK [vol%] | - | - | - | - | - | - | - | 10 | 30 | 40 | - | - |
| Thermoplastic resin | PA [vol%] | - | - | - | - | - | - | - | - | - | - | - | 60 |
| Average particle size [µm] | | 4.9 | 4.5 | 9.2 | 22.4 | 2.4 | 6.6 | 11.9 | 1.9 | 3.3 | 3.5 | - | - |
| Wear volume (×10⁻²) [cm³] | | 2.17 | 2.48 | 0.40 | 0.40 | 2.43 | 2.61 | 5.10 | 0.67 | 0.42 | 0.64 | 9.33 | 2.63 |
| Tensile strength [MPa] | | 20.6 | 14.9 | 6.4 | 10.3 | 24.3 | 10.7 | 8.9 | 13.8 | 6.3 | 20.4 | 29.7 | 23.5 |
| Tensile elongation [%] | | 317 | 212 | 14 | 0 | 333 | 110 | 13 | 206 | 28 | 0 | 414 | 0 |

As shown in Tables 1 and 2, the fluorinated copolymer compositions 1 to 10 of the present invention in Ex. 2 to 11 comprising the fluorinated copolymer (A-1) and, as a thermoplastic resin (B), PAI, PEI or PEEK, showed excellent abrasion resistance and were excellent also in mechanical properties such as tensile strength and tensile elongation. Further, as shown in Fig. 1, in the fluorinated copolymer composition 2, a sea-island structure was formed wherein the average particle size of the thermoplastic resin (B) was small.

On the other hand, the fluorinated copolymer compositions 11 to 20 in Ex. 12 to 21 wherein PFA was used instead of the fluorinated copolymer (A-1), were inferior in abrasion resistance, as compared with the respective fluorinated copolymer compositions 1 to 10 in Ex. 2 to 11 wherein the ratios of the fluorinated copolymer were respectively equivalent, and deteriorations were also observed in mechanical properties such as tensile strength and tensile elongation. Further, as shown in Fig. 2, in the fluorinated copolymer composition 12 employing PFA, a sea-island structure was formed wherein the average particle size of the thermoplastic resin (B) was large, as compared with the fluorinated copolymer composition 2 having the same ratio of the fluorinated copolymer.

Further, the fluorinated copolymer composition 21 in Ex. 22 containing no thermoplastic resin (B) and containing only the fluorinated copolymer (A-1), was inferior in abrasion resistance with a very large wear volume.

Further, the fluorinated copolymer composition 22 in Ex. 23 containing PA instead of the thermoplastic resin (B), was inferior in abrasion resistance, as compared with the fluorinated copolymer compositions 2 to 11 containing the thermoplastic resin (B).

### INDUSTRIAL APPLICABILITY

The fluorinated copolymer composition of the present invention is excellent in abrasion resistance, heat resistance, chemical resistance, mechanical strength, moldability, etc. and thus is suitable for applications including electric wire coating materials, slide members such as bearings, gear wheels, bushes, spacers, rollers, cams, etc.

## Claims

1. A fluorinated copolymer composition comprising the following fluorinated copolymer (A) and the following thermoplastic resin (B) in a volume ratio of (A)/(B) = from 90/10 to 70/30,
Fluorinated copolymer (A): a fluorinated copolymer comprising constituent units (a) derived from tetrafluoroethylene, constituent units (b) derived from a fluorinated monomer (provided that tetrafluoroethylene is excluded), and constituent units (c) derived from a monomer having an acid anhydride residue and no fluorine atom, wherein per 100 mol% in total of the constituent units (a), (b) and (c), the constituent units (a) are from 50 to 99.89 mol%, the constituent units (b) are from 0.1 to 49.99 mol%, and the constituent units (c) are from 0.01 to 5 mol%, Thermoplastic resin (B): a thermoplastic resin having a Rockwell hardness of at least M60 and an insulation performance as defined by ASTM D-257 of at least 10¹⁵ Ω·cm,
wherein the constituent units are units derived from a monomer, which are formed by polymerization of the monomer, and
wherein the thermoplastic resin (B) is polyetheretherketone.

2. The fluorinated copolymer composition according to Claim 1, wherein the fluorinated monomer is a perfluoromonomer.

3. The fluorinated copolymer composition according to Claim 1 or 2, wherein the perfluoromonomer is at least one member selected from the group consisting of a perfluoro(alkyl vinyl ether) and hexafluoropropylene.

4. The fluorinated copolymer composition according to any one of Claims 1 to 3, wherein the average particle size of the thermoplastic resin (B) is at most 4.5 µm, and wherein the fluorinated copolymer composition to be measured is frozen in liquid nitrogen and then cut, whereupon the cross-section of the fluorinated copolymer composition is observed by FE-SEM (scanning electron microscope) manufactured by Hitachi High-Technologies Corporation and the average value of visually measured long diameters of all particles of the thermoplastic resin (B) observed in the microscopic photograph of 40 µm x 30 µm with 3,000 magnifications is taken as the average particle size of the thermoplastic resin (B).

5. The fluorinated copolymer composition according to any one of Claims 1 to 4, wherein the total content of the fluorinated copolymer (A) and the thermoplastic resin (B) is from 50 to 100 mass% in the fluorinated copolymer composition (100 mass%).

6. A method for producing the fluorinated copolymer composition as defined in any one of Claims 1 to 5, which comprises melt-kneading the fluorinated copolymer (A) and the thermoplastic resin (B).

7. A molded product formed by molding the fluorinated copolymer composition as defined in any one of Claims 1 to 5.

8. An electric wire having a core wire covered with the fluorinated copolymer composition as defined in any one of Claims 1 to 5.

## Patentansprüche

1. Fluorierte Copolymerzusammensetzung, umfassend das folgende fluorierte Copolymer (A) und das folgende thermoplastische Harz (B) in einem Volumenverhältnis von (A)/(B) = von 90/10 bis 70/30,
Fluoriertes Copolymer (A): ein fluoriertes Copolymer, umfassend bildende Einheiten (a), abgeleitet von Tetrafluorethylen, bildende Einheiten (b), abgeleitet von einem fluorierten Monomer (mit der Maßgabe, dass Tetrafluorethylen davon ausgenommen ist), und bildende Einheiten (c), abgeleitet von einem Monomer, welches einen Säureanhydridrest und kein Fluoratom aufweist, wobei pro 100 mol-% aller bildenden Einheiten (a), (b) und (c), die bildenden Einheiten (a) von 50 bis 99,89 mol-% betragen, die bildenden Einheiten (b) von 0,1 bis 49,99 mol-% betragen und die bildenden Einheiten (c) von 0,01 bis 5 mol-% betragen,
Thermoplastisches Harz (B): ein thermoplastische Harz mit einer Rockwell Härte von mindestens M60 und einer Dämmleistung, welche durch ASTM D-257 definiert ist, von mindestens 10¹⁵ Ω·cm.
wobei die bildenden Einheiten von einem Monomer abgeleitete Einheiten sind, welche durch Polymerisation des Monomers gebildet sind, und
wobei das thermoplastische Harz (B) Polyetheretherketon ist.

2. Fluorierte Copolymerzusammensetzung nach Anspruch 1, wobei das fluorierte Monomer ein Perfluormonomer ist.

3. Fluorierte Copolymerzusammensetzung nach Anspruch 1 oder 2, wobei das Perfluormonomer mindestens ein Mitglied ist, ausgewählt aus der Gruppe, bestehend aus einem Perfluor(alkyl vinyl ether) und Hexafluorpropylen.

4. Fluorierte Copolymerzusammensetzung nach einem der Ansprüche 1 bis 3, wobei die durchschnittliche Teilchengröße des thermoplastischen Harzes (B) höchstens 4,5 µm beträgt, und wobei die zu messende fluorierte Copolymerzusammensetzung in flüssigem Stickstoff gefroren und anschließend geschnitten wird, wonach der Querschnitt der fluorierten Copolymerzusammensetzung mittels FE-SEM (Rasterelektronenmikroskop), welches von Hitachi High-Technologies Corporation hergestellt wurde, gemessen wird, und der durchschnittliche Wert der optisch vermessenen Langdurchmesser aller Teilchen des thermoplastischen Harzes (B), die in der mikroskopischen Aufnahme von 40 µm x 30 µm mit 3000-facher Vergrößerung erfasst werden, als die durchschnittliche Teilchengröße des thermoplastischen Harzes (B) angenommen wird.

5. Fluorierte Copolymerzusammensetzung nach einem der Ansprüche 1 bis 4, wobei der Gesamtgehalt des fluorierten Copolymers (A) und des thermoplastischen Harzes (B) von 50 bis 100 Massen-% in der fluorierten Copolymerzusammensetzung (100 Massen-%) beträgt.

6. Verfahren zum Herstellen der in einem der Ansprüche 1 bis 5 definierten fluorierten Copolymerzusammensetzung, welches das Schmelzkneten des fluorierten Copolymers (A) und des thermoplastischen Harzes (B) umfasst.

7. Formteil, welches durch das Formen der in einem der Ansprüche 1 bis 5 definierten fluorierten Copolymerzusammensetzung gebildet ist.

8. Elektrische Leitung mit einem Kerndraht, welcher mit der in einem der Ansprüche 1 bis 5 definierten fluorierten Copolymerzusammensetzung bedeckt ist.

## Revendications

1. Composition de copolymère fluoré comprenant le copolymère fluoré (A) suivant et la résine thermoplastique (B) suivante avec un rapport en volume de (A)/(B) compris entre 90/10 et 70/30,
copolymère fluoré (A) : un copolymère fluoré comprenant des unités constituantes (a) dérivées de tétrafluoroéthylène, des unités constituantes (b) dérivées d'un monomère fluoré (pourvu que le tétrafluoroéthylène en soit exclu), et des unités constituantes (c) dérivées d'un monomère comportant un résidu d'anhydride d'acide et aucun atome de fluor, dans laquelle, pour 100 % en mole au total des unités constituantes (a), (b) et (c), les unités constituantes (a) représentent de 50 à 99,89 % en mole, les unités constituantes (b) représentent de 0,1 à 49,99 % en mole et les unités constituantes (c) représentent de 0,01 à 5 % en mole,
résine thermoplastique (B) : une résine thermoplastique présentant une dureté Rockwell supérieure ou égale à M60 et une performance d'isolation telle que définie selon ASTM D-257 supérieure ou égale à 10¹⁵ Ωm,
dans laquelle les unités constituantes sont des unités dérivées d'un monomère, qui sont formées par polymérisation du monomère, et
dans laquelle la résine thermoplastique (B) est à base de polyétheréthercétone.

2. Composition de copolymère fluoré selon la revendication 1, dans laquelle le monomère fluoré est un perfluoromonomère.

3. Composition de copolymère fluoré selon la revendication 1 ou 2, dans laquelle le perfluoromonomère est au moins un élément sélectionné à partir du groupe constitué par un perfluoro(alkyle vinyle éther) et l'hexafluoropropylène.

4. Composition de copolymère fluoré selon l'une quelconque des revendications 1 à 3,
dans laquelle la taille moyenne de particule de la résine thermoplastique (B) est au plus égale à 4,5 µm, et dans laquelle la composition de copolymère fluoré à mesurer est congelée dans de l'azote liquide et ensuite coupée, après quoi la section transversale de la composition de copolymère fluoré est observée par FE-SEM (microscope électronique à balayage) fabriqué par "Hitachi High Technologies Corporation" et la valeur moyenne de diamètres longs mesurés visuellement de toutes les particules de la résine thermoplastique (B) observées sur la photographie microscopique 40 µm x 30 µm avec des agrandissements de 3000 est prise comme la taille moyenne de particule de la résine thermoplastique (B).

5. Composition de copolymère fluoré selon l'une quelconque des revendications 1 à 4, dans laquelle la teneur totale du copolymère fluoré (A) et de la résine thermoplastique (B) est de 50 à 100 % en masse de la composition de copolymère fluoré (100 % en masse).

6. Procédé de production de la composition de copolymère fluoré selon l'une quelconque des revendications 1 à 5, qui comprend le malaxage en fusion du copolymère fluoré (A) et de la résine thermoplastique (B).

7. Produit moulé formé par moulage de la composition de copolymère fluoré selon l'une quelconque des revendications 1 à 5.

8. Fil électrique comportant un fil d'âme recouvert de la composition de copolymère fluoré selon l'une quelconque des revendications 1 à 5.
